# FASCICULE DE BREVET EUROPEEN

(11) **EP 0 879 397 B1**
(45) Date de publication et mention de la délivrance du brevet: **24.04.2002**
(21) Numéro de dépôt: 97901135.0
(22) Date de dépôt: 21.01.1997
(51) Int. Cl.: G01C 23/00

(54) **PROCEDE ET DISPOSITIF D'AIDE A LA NAVIGATION AERIENNE, AVEC AFFICHAGE D'INSTRUMENTS DE NAVIGATION UTILISES**
VORRICHTUNG UND VERFAHREN FÜR FLUGZEUGNAVIGATIONSHILFE UNTER ANZEIGE DER VERWENDETEN NAVIGATIONSINSTRUMENTE
AIR NAVIGATION AID METHOD AND DEVICE FOR DISPLAYING NAVIGATION INSTRUMENTS IN USE

(30) Priorité: 09.02.1996 FR 9601623
(43) Date de publication de la demande: 25.11.1998
(73) Titulaire: THALES AVIONICS S.A., 78141 Vélizy Villacoublay Cédex (FR)
(72) Inventeur: BOMANS, Muriel Thomson-CSF S.C.P.I., F-94117 Arcueil Cédex (FR); GRAND-PERRET, Sylvie Thomson-CSF S.C.P.I., F-94117 Arcueil Cédex (FR)
(74) Mandataire: Guérin, Michel
(86) Numéro de dépôt international: FR9700117
(87) Numéro de publication internationale: WO9729346

(56) Documents cités:
- EP-A- 0 244 091
- HARDWICK C D ET AL: "AN EXPERIMENTAL VOICE COMMAND SYSTEM FOR MANAGEMENT OF AN INTEGRATED NAVIGATION SYSTEM" 5 Octobre 1992 , PROCEEDINGS OF THE DIGITAL AVIONICS SYSTEMS CONFERENCE, SEATTLE, OCT. 5 - 8, 1992, NR. CONF. 11, PAGE(S) 597 - 602 , INSTITUTE OF ELECTRICAL AND ELECTRONICS ENGINEERS XP000366744 voir page 599, colonne 2 - page 600, colonne 1

## Description

L'invention concerne les procédés et les dispositifs d'assistance à la navigation aérienne.

D'une façon générale, on sait que dans les aérodynes (avions, hélicoptères, etc.) de conception moderne, le pilote doit dialoguer avec un système de gestion de vol (en anglais "Flight Management System") qui est un calculateur embarqué dans l'aérodyne (dans la suite on parlera d'avion) pour assister le pilote dans un certain nombre d'opérations. Ces opérations sont principalement des opérations de définition de plan de vol avant le décollage, des opérations de pilotage (manuel ou automatique) pendant le décollage et l'atterrissage, des opérations de navigation aérienne (calculs de trajectoires, etc.), des opérations de contrôle systématique, en croisière ou au moment de l'approche d'un aéroport.

Le système de gestion de vol (voir EP-A-0 244 091) fonctionne à partir de données introduites par le pilote, de données fournies par des capteurs répartis dans l'avion, et éventuellement de données numériques transmises par voie hertzienne depuis le sol ou depuis d'autres avions ou même de satellites (système "DATALINK" en voie de généralisation).

Le dialogue entre l'équipe de pilotage et le système de gestion de vol se fait principalement par le moyen d'au moins trois interfaces qui sont :
- un écran de navigation ("Navigation Display") sur lequel est représenté le tracé de la route désirée pour l'avion, c'est-à-dire une représentation graphique bidimensionnelle du plan de vol de l'avion et la situation de l'avion sur ce plan;
- un écran primaire de pilotage ("Primary Flight Display") qui affiche un horizon artificiel qui s'incline lorsque l'avion s'incline, une indication d'assiette longitudinale de l'avion, et d'autres indications utiles au pilotage, en particulier le mode de guidage de l'avion;
- une boîte de commande de vol ("Flight Control Unit") ayant des commandes manuelles pour sélectionner des consignes telles que le cap désiré pour l'avion;
- et enfin une console clavier-écran, appelée MCDU ("Multipurpose Control Display Unit") qui est une console d'affichage et d'entrées de données permettant à l'équipe de pilotage d'introduire des données dans le système de gestion de vol et de lire des informations communiquées par le système de gestion de vol en fonction des données introduites.

Le système de gestion de vol a entre autres pour tâche de gérer les instruments de navigation utilisés; certains instruments de navigation peuvent être utilisés à un moment donné, d'autres sont utilisés à d'autres moments. Les instruments de navigation sont par exemple les centrales inertielles (IRS), les récepteurs de positionnement par satellite (GPS), les moyens de radionavigation (par exemple DME/DME ou VOR/DME).

C'est le système de gestion de vol FMS qui choisit lui-même les instruments de navigation à utiliser à un moment donné, en fonction de règles de priorité (assez complexes). S'il utilise des balises de radionavigation, il choisit automatiquement ces balises. Et il calcule des erreurs estimées des positions fournies par les différents instruments de navigation, et une erreur moyenne résultante. Si un instrument de navigation donne une indication de position trop mauvaise par rapport à la précision demandée, le système de gestion de vol gère lui-même le changement d'instruments, par un changement de mode de navigation.

Le pilote doit cependant être au courant des choix automatiquement faits par le système FMS car il ne faudrait pas, surtout en cas de problème, que le système continue à gérer une situation anormale dont le pilote n'aurait plus connaissance.

L'invention vise à fournir un moyen d'aide à la navigation qui facilite pour le pilote l'acquisition intuitive globale de cette information, soit en permanence, soit sur sa demande, soit encore en cas de problème détecté par le système de gestion de vol.

On propose donc ici un procédé d'aide à la navigation aérienne, utilisant un système de gestion de vol qui dialogue avec le pilote par le moyen de plusieurs interfaces parmi lesquels au moins un écran d'affichage, le système de gestion de vol fournissant des informations sur l'état de fonctionnement et la précision des différents outils de navigation aérienne présents dans un aéronef, procédé caractérisé en ce qu'il consiste à afficher simultanément sur l'écran une zone centrale représentant l'utilisation globale des outils et des zones périphériques réparties autour de la zone centrale et représentant chacune individuellement l'utilisation d'un outil de navigation particulier, et à afficher également simultanément un tracé de relation entre la zone centrale et une zone périphérique si celle-ci correspond à un outil effectivement utilisé par le système de gestion de vol, de sorte que l'affichage simultané de ces tracés de relations visibles indique le nombre d'outils effectivement utilisés par le système de gestion de vol, et les zones périphériques reliées à la zone centrale par ces tracés indiquent quels sont ces outils effectivement utilisés.

Dans un mode de réalisation avantageux, les tracés de relation comprennent une zone radiale colorée s'étendant entre la zone centrale et une zone périphérique espacée de la zone centrale. La zone radiale a de préférence une forme triangulaire ou tronconique, rétrécie vers le centre de la zone centrale et s'élargissant vers l'extérieur. Elle peut aussi avoir une forme de flèche, orientée en direction de la zone centrale. La zone centrale peut être circulaire et son diamètre peut représenter une valeur estimée d'erreur moyenne de position fournie par les instruments utilisés. Cette valeur d'erreur est calculée par le système de gestion de vol.

Dans un autre mode de réalisation intéressant, les tracés de relation visible comprennent un affichage d'une zone périphérique en contact direct avec la zone centrale, et une zone colorée dans une portion de la zone centrale adjacente à la dite zone périphérique, de sorte qu'on peut immédiatement identifier les outils utilisés d'une part, les outils non utilisés d'autre part. Les zones périphériques correspondant à des instruments de navigation utilisés peuvent comporter le nom (abrégé) de ces instruments entouré d'un encadrement. L'encadrement peut toucher dans ce cas la zone centrale. La zone centrale peut être de forme polygonale, le nombre de sommets étant égal au nombre d'outils dont le fonctionnement est nécessaire pendant une phase de vol en cours, et toute la zone centrale est colorée si tous les outils nécessaires sont utilisés.

L'invention concerne également un dispositif permettant la mise en oeuvre du procédé selon l'invention.

L'invention propose donc un dispositif d'aide à la navigation aérienne utilisant un système de gestion de vol qui dialogue avec le pilote par le moyen de plusieurs interfaces parmi lesquels au moins un écran d'affichage, le système de gestion de vol fournissant des informations sur l'état de fonctionnement et la précision des différents outils de navigation aérienne présents dans un aéronef, caractérisé en ce que des moyens sont prévus pour afficher simultanément sur l'écran une zone centrale représentant l'utilisation globale des outils et des zones périphériques réparties autour de la zone centrale et représentant chacune individuellement l'utilisation d'un outil de navigation particulier, et pour afficher également simultanément un tracé de relation entre la zone centrale et une zone périphérique si celle-ci correspond à un outil effectivement utilisé par le système de gestion de vol, de sorte que l'affichage simultané de ces tracés de relations visibles indique le nombre d'outils effectivement utilisés par le système de gestion de vol, et les zones périphériques reliées à la zone centrale par ces tracés indiquent quels sont ces outils effectivement utilisés.

Les moyens prévus sont tels qu'on représente différemment les zones associées à des outils qui sont en état de fonctionnement satisfaisant et les zones associées à des outils qui ne peuvent pas fonctionner correctement, la détermination du fonctionnement correct ou incorrect étant faite par le système de gestion de vol.

Dans une réalisation avantageuse, l'écran est un écran d'une console d'affichage et d'entrée de données permettant la sélection de zones déterminées de l'écran pour l'exécution d'opérations liées à ces zones; les zones périphériques peuvent être sélectionnées et des moyens sont prévus pour afficher sur l'écran des données relatives à l'outil de navigation correspondant à une zone périphérique lorsque cette zone est sélectionnée.

Enfin, dans le cas où le système de gestion de vol détecte que le nombre d'outils de navigation effectivement utilisables est inférieur à celui qui serait théoriquement nécessaire compte tenu de la phase de vol en cours, lé système affiche les relations entre zone centrale et zones périphériques sous une couleur spécifique qui attire l'attention du pilote sur le caractère anormal de la situation.

D'autres caractéristiques et avantages de l'invention apparaîtront à la lecture de la description détaillée qui suit et qui est faite en référence aux dessins annexés dans lesquels :
- la figure 1 représente l'ensemble du dispositif d'aide à la navigation selon l'invention;
- les figures 2 à 9 représentent l'image d'écran affichée dans un premier mode de réalisation de l'invention, pour différentes situations;
- les figures 10 à 17 représentent l'image affichée dans un deuxième mode de réalisation;
- les figures 18 à 25 représentent une image affichée dans un autre cas, toujours avec le deuxième mode de réalisation.
- la figure 26 représente un exemple d'image plus détaillée.

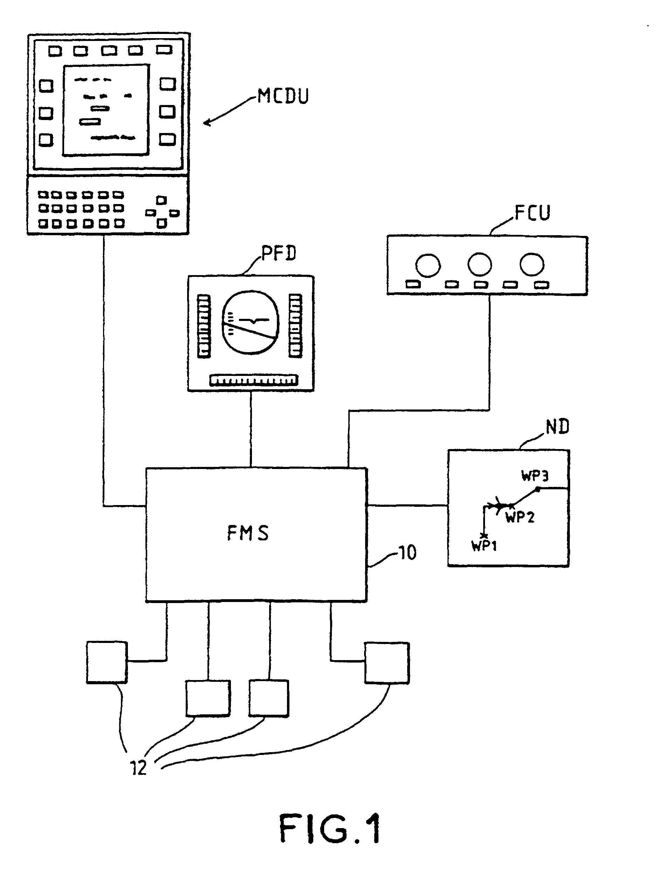

Le dispositif d'aide à la navigation selon l'invention constitue une partie d'un système global de contrôle de l'avion. Ce système global, représenté à la figure 1, comporte essentiellement :
- le système de gestion de vol, ou FMS ("Flight Management System"), qui est un calculateur 10 apte à recevoir des informations diverses, à élaborer d'autres informations, et à les communiquer au pilote par le moyen d'interfaces de dialogue;
- des capteurs 12 répartis dans l'avion, parmi lesquels par exemple des instruments de navigation (centrales inertielles IRS, etc.), des capteurs divers donnant des informations sur l'état de l'avion, éventuellement des instruments de communication avec l'extérieur, tous ces capteurs étant reliés au système de gestion de vol;
- les interfaces de dialogue avec le pilote, reliés au calculateur 10, parmi lesquels on peut trouver principalement :
   - une boîte de commande de vol, dite FCU ("Flight Control Unit") permettant, à l'aide de boutons, de sélectionner par exemple le cap de l'avion, ou d'autres valeurs de consigne qu'il est nécessaire de fournir au système de gestion;
   - un écran d'affichage d'informations de navigation, ND ("Navigation Display"), pour afficher des cartes, plans de vol, etc.,
   - un écran d'affichage d'informations de pilotage, PFD ("Primary Flight Display"), pour afficher un horizon artificiel, des altitudes de l'avion, assiettes, vecteurs vitesse, une indication de mode de guidage ("Flight Mode Annunciator"), etc.,
   - une console d'affichage et d'entrées de données, MCDU ("Multipurpose Control Display Unit").

Les indications de fonctionnement des divers instruments de navigation utilisés par le système de gestion de vol peuvent être affichés sur un écran de type MCDU ou éventuellement sur l'écran de navigation ND, sur demande du pilote (par l'intermédiaire d'une touche de fonction appropriée), ou automatiquement en cas de problème.

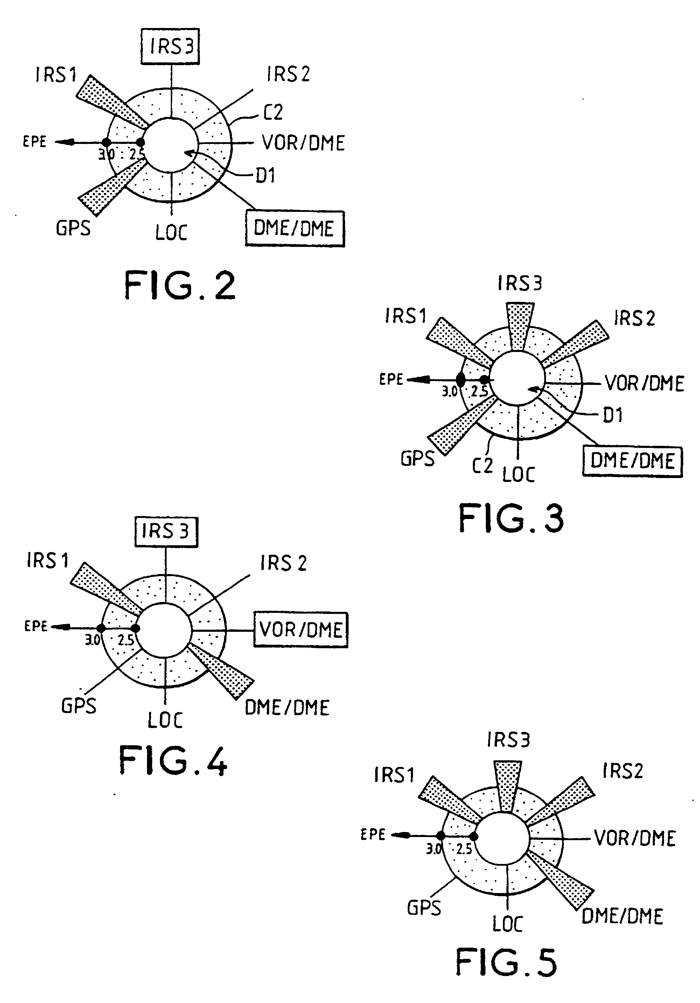

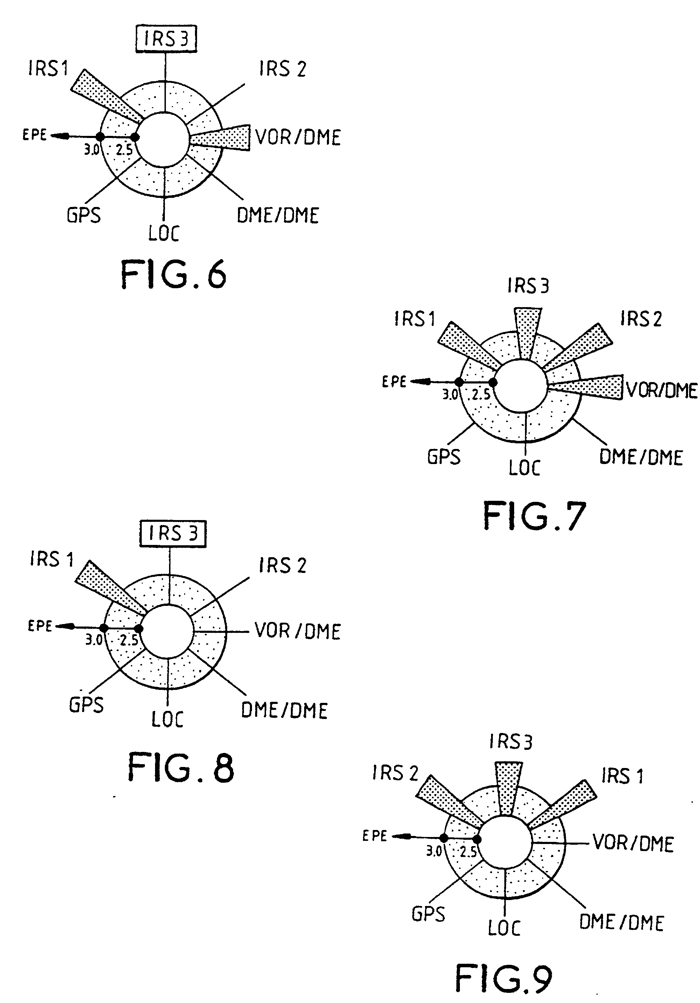

Dans un premier mode de réalisation, les affichages que le système fait apparaître sur l'écran sont du type de ceux des figures 2 à 9. ces figures représentent des exemples pour des cas particuliers de configuration détectées par le système de gestion de vol, et on va expliquer en détail les principes de l'affichage réalisé dans le cas général.

Le système affiche une zone centrale qui est constituée par un disque D1 dont le diamètre est une mesure de l'erreur de position moyenne estimée par le calculateur en fonction des instruments de navigation dont il dispose et dont il a calculé les précisions individuelles; le diamètre du disque D1 est d'autant plus petit que la précision est meilleure.

Cette zone centrale représente donc en quelque sorte le fonctionnement global des instruments de navigation utilisés, et sa dimension représente la précision moyenne obtenue par ces instruments.

On peut représenter également, si on le désire, un cercle C2 concentrique au disque D1, ce cercle ayant pour diamètre l'erreur de position moyenne maximale admissible pour un fonctionnement correct du système.

Le disque D1 est donc de diamètre plus petit que le cercle C2 dans un cas normal, et de diamètre identique à celui du cercle C2 dans un cas anormal.

Le disque D1 peut être coloré en vert dans le cas d'une situation normale (disque D1 vert à l'intérieur du cercle C2 qui peu être une ligne rouge). Et on peut prévoir également que le disque D1 change de couleur de fond (coloration en rouge par exemple) si son diamètre devient égal à celui du cercle C2. Le pilote a ainsi une indication visuelle globale intuitive d'une situation normale et d'une situation anormale. Les figures 2 à 9 sont tracées dans le cas d'une situation de précision normale.

Une valeur estimée de l'erreur de position peut être représenté sur l'écran; elle est désignée par les lettres EPE sur les figures 2 à 9.

L'utilisation des différents instruments de navigation est représentée par des zones périphériques, tout autour de la zone centrale. Le plus simple est que chaque zone comporte une inscription littérale en clair (en pratique sous forme abrégée en quelques lettres) d'un instrument de navigation déterminé.

Dans le cas des figures 2 à 9, il y a 7 outils de navigation possibles qui sont trois centrales inertielles IRS1, IRS2, IRS3, un récepteur GPS, des moyens de radionavigation VOR/DME, DME/DME, LOC. Tous les moyens susceptibles d'être utilisés au cours de la phase de vol courante sont affichés.

Si le système de gestion de vol utilise effectivement un outil, il affiche un tracé de relation entre la zone centrale D1 et la zone périphérique correspondant au moyen utilisé. Ce tracé s'étend radialement entre la zone centrale et la zone périphérique concernée. Le tracé est ici un trapèze (ou un triangle) isocèle ayant deux côtés latéraux égaux s'étendant sensiblement radialement et deux côtés parallèles inégaux dont le petit côté est dirigé vers la zone centrale et dont le grand côté est dirigé vers la zone périphérique concernée. Le tracé de relation peut aussi être une flèche radiale orientée du moyen de la zone périphérique vers le centre de la zone centrale, ou éventuellement orientée en sens inverse, c'est-à-dire vers la zone périphérique correspondant à un moyen de navigation utilisé. Les tracés de relation (triangle ou trapèze ou flèche, etc.) sont d'une couleur qui se détache bien par rapport au fond de l'écran et par rapport à la couronne entre le disque D1 et le cercle C2.

L'image globale affichée est en quelque sorte celle d'une fleur avec des pétales radiaux Il y a autant de pétales que d'outils de navigation utilisés et le pilote peut apprécier d'un coup d'oeil si le nombre d'outils utilisés est normal. Le nombre de pétales de la fleur représente une estimation de la sécurité de navigation.

Les autres zones périphériques, qui seraient situées à l'extrémité d'un tracé radial si l'outil de navigation correspondant était utilisé, peuvent être distinguées selon que l'outil auquel elles correspondent est valide (bien que non utilisé) ou non. Dans l'exemple représenté, les outils valides non utilisés sont encadrés, les autres ne le sont pas (ou le contraire). Les outils utilisés, à l'extrémité d'un tracé radial sont nécessairement valides; par conséquent il n'est pas nécessaire de leur conférer une marque particulière. Toutefois, on peut également les encadrer afin qu'on n'ait pas l'impression visuelle qu'un outil invalide est utilisé.

Les différentes figures 2 à 9 représentent des configurations possibles de l'écran pour diverses utilisation d'outils. Elles sont données à titre d'exemple et correspondent aux explications données ci-dessus.

Si l'écran utilisé est interactif, c'est-à-dire si l'utilisateur peut désigner une zone de l'écran pour déclencher une action correspondant à cette zone, on peut apporter le perfectionnement suivant : la désignation d'une zone périphérique déterminée entraîne l'affichage sur l'écran de caractéristiques particulières correspondant à l'outil de navigation ainsi désigné. Le pilote peut ainsi recueillir des informations plus précises sur les différents outils utilisés ou non utilisés.

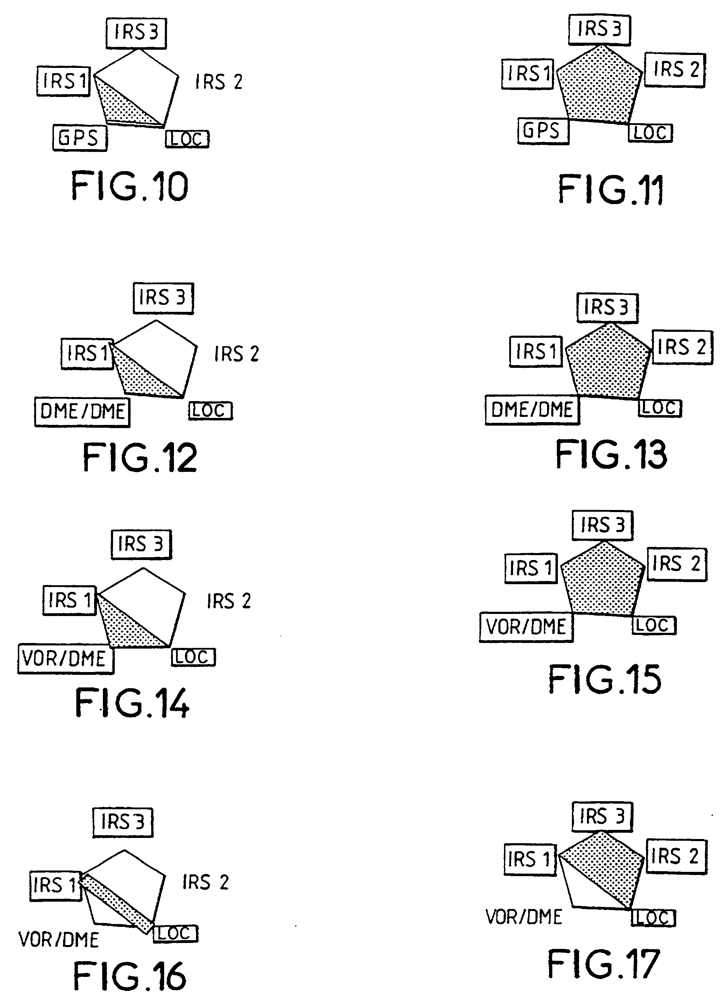

Les figures 10 à 17 représentent un autre mode de réalisation, dans lequel on a encore des tracés de relation particuliers entre la zone centrale et une zone périphérique correspondant à un instrument de navigation utilisé et dans lequel cette fois :
- la zone centrale est de forme polygonale;
- les tracés de relation entre la zone centrale et une zone périphérique comprennent deux éléments :
   - une zone colorée dans une bande touchant la zone périphérique, cette zone colorée ayant une extension telle que si deux instruments de navigation sont utilisés, les deux zones périphériques correspondantes sont reliées par une bande colorée continue. Par "zone colorée", on entend une zone d'une couleur qui se distingue du fond, même si cette couleur est du blanc ou du noir.
   - et un encadrement de la zone périphérique correspondant à un outil utilisé, cet encadrement jouxtant de préférence immédiatement le polygone de la zone centrale et jouxtant donc le fond coloré associé. Le nom abrégé de l'outil est inscrit dans cet encadrement

Les outils non utilisés apparaissent non reliés à la zone polygonale et surtout non adjacents aux zones colorées de la zone polygonale.

Les outils non utilisés mais valides peuvent apparaître sous forme encadrée, alors que les outils non utilisés et non valides n'ont pas d'encadrement.

Dans cette réalisation, on prévoit que le nombre de sommets du polygone central est égal au nombre d'outils de navigation qui doivent être utilisés au cours de la phase de vol si le fonctionnement est normal. Cela signifie que si le fonctionnement est normal, toute la zone polygonale centrale doit apparaître colorée (figures 11, 13, 15). Dans le cas des figures 10 à 17, il doit avoir 5 outils de navigation à la fois. Si un polygone coloré plus réduit apparaît (triangle : figures 10, 12, 14; trapèze figure 17; bande simple figure 16), c'est qu'il y a une situation anormale. Le pilote peut la détecter très facilement d'après la forme et la surface de la zone colorée centrale. Il a ensuite des détails en observant quels noms d'instruments de navigation apparaissent dans les zones périphériques. Là encore, il peut avoir plus de détails en sélectionnant une zone périphérique désirée s'il possède des moyens d'interactivité avec l'écran.

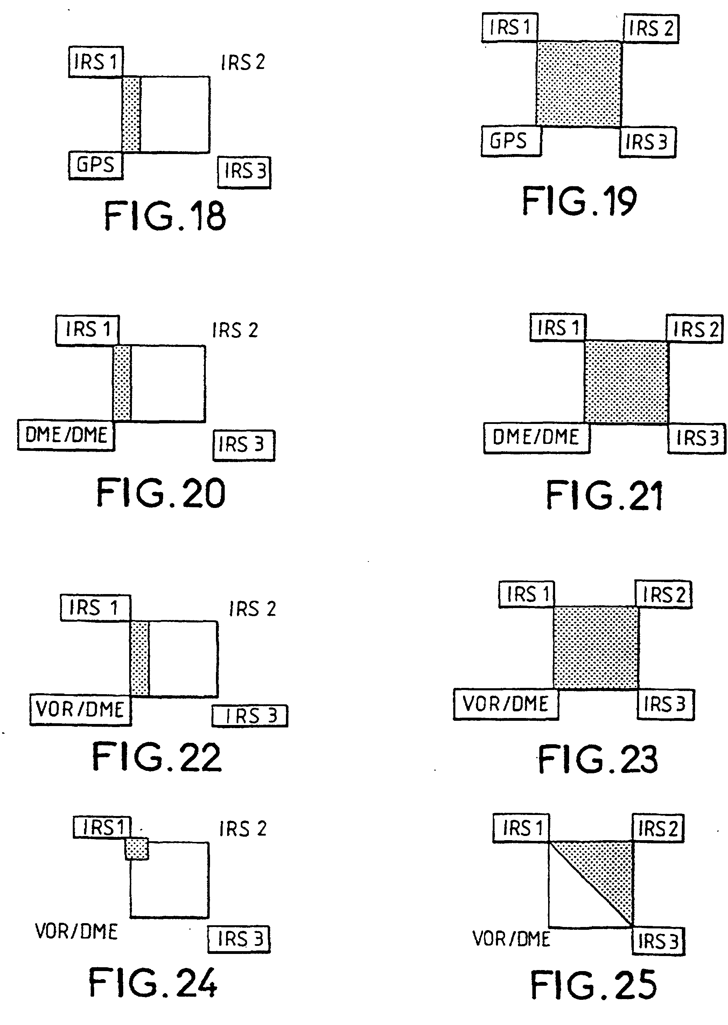

Les figures 18 à 25 représentent un affichage dans le même mode de réalisation, mais au cours d'une phase de vol où le nombre d'outils de navigation qui doivent être en service est seulement de quatre.

Dans les figures 10 à 17 et 18 à 25, il est souhaitable qu'apparaissent dans une partie de l'écran, sous une forme ou sous une autre (cercles concentriques, échelle graduée, etc.) une mesure de l'erreur de position moyenne fournie par les instruments, et une mesure de l'erreur maximale tolérable au cours de la phase de vol considérée. Cette mesure n'a pas été représentée sur les figures.

Dans ces figures également, il faut signaler que le nom des outils qui s'affiche dans les zones périphériques peut varier au cours du temps. En effet, le système de gestion de vol n'affiche pas tous les outils disponibles (comme c'était le cas pour les figures 2 à 9) mais seulement un nombre limité d'outils. C'est ainsi que la figure 11 représente une configuration normale utilisant les outils IRS1, IRS2, IRS3, GPS et LOC, alors que la figure 13 représente une configuration également normale mais utilisant l'outil DME/DME au lieu de GPS. C'est la même chose pour les figures 19 et 21.

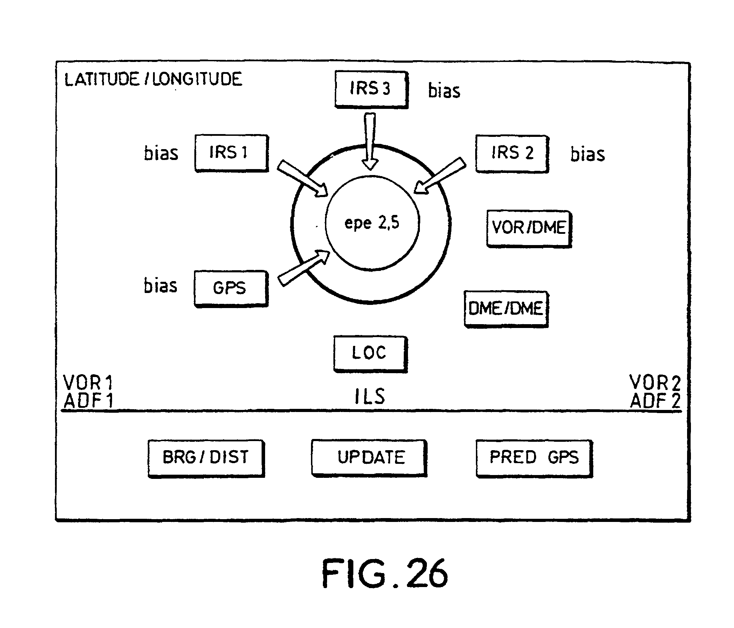

La figure 26 représente une configuration réaliste d'écran d'aide à la navigation fonctionnant selon le principe de l'invention. La zone périphérique est un disque vert. L'indication d'erreur de position actuelle, epe 2,5, est donnée dans le centre de ce disque. Le diamètre de ce disque est proportionnel à l'indication epe. Un cercle rouge C2 de diamètre correspondant à l'erreur maxiamle de position admissible entoure le disque vert D1. Les zones radiales sont des flèches tournées vers le centre du disque D1. Les zones périphériques sont des rectangles contenant une inscription correspondant à un outil de navigation; elles ont la forme de boutons de sélection (sur lesquelles on peut "cliquer" pour obtenir des informations supplémentaires sur l'outil correspondant). Il n'y a pas de flèches pour les outils non utilisés. Des indications supplémentaires, en dehors de la zone centrale et des zones périphériques, concernent l'existence de moyens de navigation non utilisables actuellement (VOR1, ADF1, ILS, VOR2 ADF2 dans l'exemple de la figure 26). Enfin, d'autres boutons de sélection (BRG/DIST, UPDATE, PRED GPS) permettent d'obtenir d'autres informations encore relatives à la navigation ou de mettre à jour les informations.

## Revendications

1. Procédé d'aide à la navigation aérienne, utilisant un système de gestion de vol qui dialogue avec le pilote par le moyen de plusieurs interfaces parmi lesquels au moins un écran d'affichage (MCDU), le système de gestion de vol fournissant des informations sur l'état de fonctionnement et la précision des différents outils de navigation aérienne présents dans un aéronef, procédé **caractérisé en ce qu'**il consiste à afficher simultanément sur l'écran une zone centrale (D1) représentant l'utilisation globale des outils et des zones périphériques réparties autour de la zone centrale et représentant chacune individuellement l'utilisation d'un outil de navigation particulier, et à afficher également simultanément un tracé de relation entre la zone centrale et une zone périphérique si celle-ci correspond à un outil effectivement utilisé par le système de gestion de vol, de sorte que l'affichage simultané de ces tracés de relations visibles indique le nombre d'outils effectivement utilisés par le système de gestion de vol, et les zones périphériques reliées à la zone centrale par ces tracés indiquent quels sont ces outils effectivement utilisés.

2. Procédé selon la revendication 1, **caractérisé en ce que** les tracés de relation comprennent une zone radiale colorée s'étendant entre la zone centrale et une zone périphérique espacée de la zone centrale.

3. Procédé selon la revendication 2, **caractérisé en ce que** la zone radiale a une forme triangulaire ou tronconique, rétrécie vers le centre de la zone centrale et s'élargissant vers l'extérieur.

4. Procédé selon la revendication 2, **caractérisé en ce que** la zone radiale a une forme de flèche.

5. Procédé selon l'une des revendications 1 à 4, **caractérisé en ce que** la zone centrale est un disque (D1) dont le diamètre représente une valeur estimée d'erreur moyenne de position fournie par les instruments utilisés.

6. Procédé selon la revendication 5, **caractérisé en ce que** le système de gestion de vol affiche autour du disque une ligne circulaire dont le diamètre représente l'erreur moyenne de position maximale acceptable.

7. Procédé selon la revendication 1, **caractérisé en ce que** les tracés de relation visible entre la zone centrale et une zone périphérique correspondant à un outil de navigation utilisé comprennent un affichage de cette zone périphérique en contact direct avec la zone centrale, et une zone colorée dans une portion de la zone centrale adjacente à la dite zone périphérique, de sorte qu'on peut immédiatement identifier les outils utilisés d'une part, les outils non utilisés d'autre part.

8. Procédé selon la revendication 7, **caractérisé en ce que** le système de gestion de vol affiche une zone centrale polygonale telle que le nombre de sommets du polygone est égal au nombre d'outils de navigation théoriquement nécessaire dans une phase de vol courante, **en ce que** la totalité du polygone est colorée si le système utilise effectivement ce nombre d'outils.

9. Procédé selon la revendication 8, **caractérisé en ce qu'**une zone périphérique correspondant à un outil reconnu valide par le système de gestion de vol mais non utilisé par ce système est affichée sous une forme encadrée.

10. Dispositif d'aide à la navigation aérienne utilisant un système de gestion de vol qui dialogue avec le pilote par le moyen de plusieurs interfaces parmi lesquels au moins un écran d'affichage, le système de gestion de vol fournissant des informations sur l'état de fonctionnement et la précision des différents outils de navigation aérienne présents dans un aéronef, **caractérisé en ce que** des moyens sont prévus pour afficher simultanément sur l'écran une zone centrale représentant l'utilisation globale des outils et des zones périphériques réparties autour de la zone centrale et représentant chacune individuellement l'utilisation d'un outil de navigation particulier, et pour afficher également simultanément un tracé de relation entre la zone centrale et une zone périphérique si celle-ci correspond à un outil effectivement utilisé par le système de gestion de vol, de sorte que l'affichage simultané de ces tracés de relations visibles indique le nombre d'outils effectivement utilisés par le système de gestion de vol, et les zones périphériques reliées à la zone centrale par ces tracés indiquent quels sont ces outils effectivement utilisés.

11. Dispositif selon la revendication 10, **caractérisé en ce que** l'écran est un écran d'une console d'affichage et d'entrée de données permettant la sélection de zones déterminées de l'écran pour l'exécution d'opérations liées à ces zones, et **en ce que** des moyens sont prévus pour afficher sur l'écran des données relatives à l'outil de navigation correspondant à une zone périphérique lorsque cette zone est sélectionnée.

12. Dispositif selon une des revendications 10 et 11, **caractérisé en ce que** des moyens sont prévus pour représenter différemment les zones associées à des outils qui sont en état de fonctionnement satisfaisant et les zones associées à des outils qui ne peuvent pas fonctionner correctement.

## Patentansprüche

1. Verfahren zur Unterstützung der Flugnavigation, das ein Flugleitsystem verwendet, das mit dem Piloten mittels mehrerer Schnittstellen, unter denen sich wenigstens ein Anzeigeschirm (MCDU) befindet, in Dialog steht, wobei das Flugleitsystem Informationen bezüglich des Betriebszustandes und der Präzision verschiedener in einem Flugzeug vorhandener Flugnavigationsinstrumente liefert, wobei das Verfahren **dadurch gekennzeichnet ist, daß** es darin besteht, auf dem Schirm gleichzeitig eine zentrale Zone (D1), die die globale Verwendung der Instrumente repräsentiert, und periphere Zonen, die um die zentrale Zone verteilt sind und jeweils einzeln die Verwendung eines besonderen Navigationsinstruments repräsentieren, anzuzeigen und außerdem gleichzeitig eine Spur der Beziehung zwischen der zentralen Zone und einer peripheren Zone anzuzeigen, falls die periphere Zone einem Instrument entspricht, das vom Flugleitsystem tatsächlich verwendet wird, so daß die gleichzeitige Anzeige dieser Spuren sichtbarer Beziehungen die Anzahl der vom Flugleitsystem tatsächlich verwendeten Instrumente angibt und die peripheren Zonen, die mit der zentralen Zone durch diese Spuren verbunden sind, angeben, welche diese tatsächlich verwendeten Instrumente sind.

2. Verfahren nach Anspruch 1, **dadurch gekennzeichnet, daß** die Beziehungsspuren eine farbige radiale Zone umfassen, die sich zwischen der zentralen Zone und einer von der zentralen Zone beabstandeten peripheren Zone erstreckt.

3. Verfahren nach Anspruch 2, **dadurch gekennzeichnet, daß** die radiale Zone eine Dreieck- oder Kegelstumpfform hat, die zum Zentrum der zentralen Zone verjüngt ist und sich nach außen erweitert.

4. Verfahren nach Anspruch 2, **dadurch gekennzeichnet, daß** die radiale Zone Pfeilform hat.

5. Verfahren nach einem der Ansprüche 1 bis 4, **dadurch gekennzeichnet, daß** die zentrale Zone eine Scheibe (D1) ist, deren Durchmesser einen mittleren geschätzten Fehlerwert für die von den verwendeten Instrumenten gelieferte Position repräsentiert.

6. Verfahren nach Anspruch 5, **dadurch gekennzeichnet, daß** das Flugleitsystem um die Scheibe eine Kreislinie anzeigt, deren Durchmesser den höchstens annehmbaren mittleren Positionsfehler repräsentiert.

7. Verfahren nach Anspruch 1, **dadurch gekennzeichnet, daß** die Spuren der sichtbaren Beziehung zwischen der zentralen Zone und einer peripheren Zone, die einem verwendeten Navigationsinstrument entspricht, eine Anzeige dieser peripheren Zone in direktem Kontakt mit der zentralen Zone und einer farbigen Zone in einem Abschnitt der zentralen Zone, der an die periphere Zone angrenzt, umfassen, so daß sofort einerseits die verwendeten Instrumente und andererseits die nicht verwendeten Instrumente identifiziert werden können.

8. Verfahren nach Anspruch 7, **dadurch gekennzeichnet, daß** das Flugleitsystem eine polygonförmige zentrale Zone anzeigt, derart, daß die Anzahl der Scheitel des Polygons gleich der Anzahl der in einer Phase des momentanen Flugs theoretisch notwendigen Navigationsinstrumente ist, und daß das gesamte Polygon farbig ist, falls das System tatsächlich diese Anzahl von Instrumenten verwendet.

9. Verfahren nach Anspruch 8, **dadurch gekennzeichnet, daß** eine periphere Zone, die einem Instrument entspricht, das vom Flugleitsystem als gültig erkannt, jedoch von diesem System nicht verwendet wird, in einer eingerahmten Form angezeigt wird.

10. Vorrichtung zur Unterstützung der Flugnavigation, die ein Flugleitsystem verwendet, das mit dem Piloten mittels mehrerer Schnittstellen, unter denen sich wenigstens ein Anzeigeschirm befindet, in Dialog steht, wobei das Flugleitsystem Informationen über den Betriebszustand und die Präzision verschiedener in einem Flugzeug vorhandener Flugnavigationsinstrumente liefert, **dadurch gekennzeichnet, daß** Mittel vorgesehen sind, die auf dem Bildschirm gleichzeitig eine zentrale Zone, die die globale Verwendung der Instrumente repräsentiert, und periphere Zonen, die um die zentrale Zone verteilt sind und jeweils einzeln die Verwendung eines besonderen Navigationsinstruments repräsentieren, anzeigen und außerdem gleichzeitig eine Spur der Beziehung zwischen der zentralen Zone und einer peripheren Zone anzeigen, falls diese periphere Zone einem vom Flugleitsystem tatsächlich verwendeten Instrument entspricht, so daß die gleichzeitige Anzeige dieser Spuren sichtbarer Beziehungen die Anzahl der vom Flugleitsystem tatsächlich verwendeten Instrumente angibt und die mit der zentralen Zone durch diese Spuren verbundenen peripheren Zonen' angeben, welche diese tatsächlich verwendeten Instrumente sind.

11. Vorrichtung nach Anspruch 10, **dadurch gekennzeichnet, daß** der Schirm ein Schirm einer Anzeige- und Dateneingabekonsole ist, der die Auswahl bestimmter Zonen des Schirms für die Ausführung von mit diesen Zonen in Verbindung stehenden Operationen ermöglicht, und daß Mittel vorgesehen sind, die auf dem Schirm Daten anzeigen, die auf das Navigationsinstrument bezogen sind, das einer peripheren Zone entspricht, falls diese Zone ausgewählt ist.

12. Vorrichtung nach einem der Ansprüche 10 und 11, **dadurch gekennzeichnet, daß** Mittel vorgesehen sind, die die Zonen, die Instrumenten zugeordnet sind, die in einem zufriedenstellenden Betriebszustand sind, und die Zonen, die Instrumenten zugeordnet sind, die nicht korrekt arbeiten können, unterschiedlich darstellen.

## Claims

1. Process for aiding aerial navigation, using a flight management system which carries out a dialogue with the pilot by means of several interfaces which include at least one display screen (MCDU), the flight management system delivering information about the state of operation and the accuracy of the various aerial navigation tools present in an aircraft, which process is **characterized in that** it consists in simultaneously displaying on the screen a central zone (D1) representing the overall use of the tools and peripheral zones distributed around the central zone and each individually representing the use of a particular navigation tool, and in also displaying simultaneously a plot of relationship between the central zone and a peripheral zone if the latter corresponds to a tool which is actually used by the flight management system, so that the simultaneous displaying of these visible plots of relationships indicates the number of tools actually used by the flight management system, and the peripheral zones linked to the central zone by these plots indicate which are these actually used tools.

2. Process according to Claim 1, **characterized in that** the plots of relationship comprise a coloured radial zone extending between the central zone and a peripheral zone distant from the central zone.

3. Process according to Claim 2, **characterized in that** the radial zone has a triangular or frustoconical shape, narrowing towards the centre of the central zone and becoming wider towards the outside.

4. Process according to Claim 2, **characterized in that** the radial zone has an arrow shape.

5. Process according to one of Claims 1 to 4, **characterized in that** the central zone is a disk (D1) whose diameter represents an estimated value of mean error in position delivered by the instruments used.

6. Process according to Claim 5, **characterized in that** the flight management system displays a circular line around the disk, the diameter of the former representing the maximum acceptable mean position error.

7. Process according to Claim 1, **characterized in that** the plots of relationship visible between the central zone and a peripheral zone corresponding to a navigation tool which is used comprise a display of this peripheral zone in direct contact with the central zone, and a coloured zone in a portion of the central zone adjacent to the said peripheral zone, so that it is immediately possible to identify on the one hand those tools which are used and on the other hand those tools which are not used.

8. Process according to Claim 7, **characterized in that** the flight management system displays a polygonal central zone such that the number of vertices of the polygon is equal to the number of navigation tools which is theoretically necessary in a current flight phase, **in that** the entire polygon is coloured if the system actually uses this number of tools.

9. Process according to Claim 8, **characterized in that** a peripheral zone corresponding to a tool recognized as valid by the flight management system but which is not used by this system is displayed in a framed form.

10. Device for aiding aerial navigation, using a flight management system which carries out a dialogue with the pilot by means of several interfaces which include at least one display screen, the flight management system delivering information about the state of operation and the accuracy of the various aerial navigation tools present in an aircraft, **characterized in that** means are provided for simultaneously displaying on the screen a central zone representing the overall use of the tools and peripheral zones distributed around the central zone and each individually representing the use of a particular navigation tool, and also for simultaneously displaying a plot of relationship between the central zone and a peripheral zone if the latter corresponds to a tool which is actually used by the flight management system, so that the simultaneous displaying of these visible plots of relationships indicates the number of tools actually used by the flight management system, and the peripheral zones linked to the central zone by these plots indicate which are these actually used tools.

11. Device according to Claim 10, **characterized in that** the screen is a screen of a data display and input console allowing the selection of specified zones of the screen for the execution of operations related to these zones, and **in that** means are provided for displaying data on the screen which pertain to the navigation tool corresponding to a peripheral zone when this zone is selected.

12. Device according to one of Claims 10 and 11, **characterized in that** means are provided for differently representing the zones associated with tools which are in a satisfactory state of operation and the zones associated with tools which cannot operate correctly.
